# EUROPEAN PATENT SPECIFICATION

(11) **EP 3 478 633 B1**
(45) Date of publication and mention of the grant of the patent: **24.03.2021**
(21) Application number: 17823714.5
(22) Date of filing: 04.07.2017
(51) Int. Cl.: C01B 13/11

(54) **OZONE GENERATOR OF A GAS BLOW-THROUGH TYPE, ESPECIALLY TO PRODUCE A GAS MIXTURE OF OZONE/AIR OR OZONE/OXYGEN**
OZONGENERATOR VOM GASDURCHBLASTYP, INSBESONDERE ZUR HERSTELLUNG EINER GASMISCHUNG AUS OZON/LUFT ODER OZON/SAUERSTOFF
GÉNÉRATEUR D'OZONE À GAZ SOUFFLÉ, NOTAMMENT POUR PRODUIRE UN MÉLANGE GAZEUX OZONE/AIR OU OZONE/OXYGÈNE

(30) Priority: 04.07.2016 HU 1600188 U
(43) Date of publication of application: 08.05.2019
(73) Proprietor: Ozonextrade Szolgáltató, Fejlesztö És Kereskedelmi KFT., 1141 Budapest (HU)
(72) Inventor: BRUNNER, Rita, 9781 Egyházhollós (HU); KOLTAY, Péter, 9700 Szombathely (HU)
(74) Representative: Danubia Patent & Law Office LLC
(86) International application number: PCT/HU2017/050026
(87) International publication number: WO 2018/007841

(56) References cited:
- WO-A1-2014/135905
- DE-A1-102008 006 256
- GB-A- 854 616
- US-A- 3 622 492
- US-A- 5 540 898

## Description

The object of the present invention is an ozone generator of a gas blow-through type, especially to produce a gas mixture of ozone/air or ozone/oxygen.

It is known, that in our modern age, sterilization effects of ozone gas are recognized and thus ozone-air and ozone-oxygen gas mixtures are used in more and more technical fields for sterilization purposes.

Experience of several years or even decades show, that sterilization methods using ozone gas are the most efficient against contagious pathogens present in our modern world in ever increasing numbers. This great efficiency is supported by measurements demonstrating that the sterilization effect of ozone is (depending on the ozone concentration) 3000-9000 times larger than, that of e.g. chlorine in gaseous or mist form. Experiments carried out in laboratory conditions show that the time necessary for killing E. coli bacteria is 15,000 seconds in the case of chlorine while only 4 seconds in the case of ozone.

Ozone does not only destroy most bacteria and viruses, but also destroys fungi, fungus spores, toxins produced by fungi and the whole of all other known pathogens. The reason of such an effective sterilization capability is the very strong oxidizing property of ozone.

This oxidation process is so quick and effective that microorganisms are unable to build up immunity (resistance), unlike in the case of conventional chemicals.

A further great advantage of sterilization carried out with ozone gas is that it does not leave behind residues after the treatment, the air in the treated areas is refreshed, and while completely destroying the pathogens, it also removes unpleasant odors and due to the ozone breaking down quickly, the precautionary waiting period is extremely short after the procedure.

Upon the examination of ozone generator apparatuses available at the present state of the art for producing ozone-air and ozone-oxygen gas mixture in the literature, among patent data and in practical application, a plurality of solutions may be found. The most widespread solution in the state of the art is the original solution of Siemens applied in different technical embodiments. This solution utilizes cylindrical grid electrodes and a cylindrical glass dielectric tube with an air gap on one or both sides in many cases with water cooling. There is also a great variety of high voltage drive generators, primarily in terms of the voltage and frequency of the drive voltage. These state of the art technologies are operational, but their solutions include their own limitations on efficiency, because a common disadvantage of all the solutions is that the surface area and number of the grid electrodes is limited, it is difficult to form the necessary air gap precisely, cooling of the system can only be carried out in a sophisticated manner due to the enclosed configuration, usually with a cooling liquid, and a malfunction of the cooling system may pose a fire hazard. Due to the aforementioned disadvantages, the performance of these ozone generators is greatly limited.

Hungarian utility model No. HU4286 (U) discloses an ozone generator, where in a tube (cylindrical mantle) shaped outer insulating housing flat electrodes and dielectric plates are arranged parallel with each other and the axis of the housing.

A disadvantage of this solution is that due to the limited volume capacity of the tube shaped outer housing, upgrading the apparatus for increasing its production capacity is difficult, and its control unit is not suitable for controlling the amount or concentration of the produced ozone.

However, a solution would be preferred, in which the ozone-production capacity of the apparatus may be simply increased by modular addition of corresponding subassemblies.

The object of the present invention is to provide an ozone generator apparatus capable of producing high concentration ozone in high quantities in continuous operation, having a simple structure, the number of ozone producing units may be easily increased modularly, the air or oxygen which is used as an ozone source flowing through the apparatus also functions as a cooling medium itself, having low operating costs, having high efficiency and good effectiveness, does not pose a fire hazard and the use of the apparatus does not cause environmental load or pollution in electric or any other form.

According to the object, the apparatus has to solve the following problems:
The apparatus has to ensure the production of high quantities of high-concentration ozone from the air or oxygen flowing through it.

The structure of the apparatus has to be suitable for simple and precise construction, production.

The number of ozone producing units disposed in the apparatus has to be simply and easily increasable.

The construction of the apparatus has to ensure that the air or oxygen flowing through it and functioning as the ozone source, also functions as a cooling medium in a way, that completely eliminates the fire hazard and the risk of environmental pollution.

The high-voltage electric generator of the apparatus has to ensure that its operation does not affect negatively the power network supplying it and has to ensure economical and safe operation of the ozone producing unit.

The high-voltage electric generator of the apparatus has to ensure the optimization of the electric parameters necessary for ozone production based on the temperature and humidity parameters of the air or oxygen functioning as the ozone source by the internal regulation of its operational parameters.

The high-voltage electric generator of the apparatus has to ensure adjustability of the amount and concentration of the produced ozone by external control of its operational parameters.

The aforementioned objects of the invention are achieved in one aspect by elaborating the ozone generator according to claim 1; preferred exemplary embodiments of the ozone generator are set forth in claims 2-9.

In a further aspect, the object of the present invention is achieved by the method according to claim 10, whose preferred embodiments are defined by claims 11-12.

One of the important findings forming the basis of the invention is that flat plate electrodes may be used for increasing the amount of produced ozone and to simplify the construction of the ozone producing apparatus. Increasing the surface area of the flat plate electrodes results in an increase in the amount of ozone produced.

Another important finding forming the basis of the invention is that by placing the groups of electrodes comprising flat plate electrodes next to and parallel to each other modularly, the total surface area of the electrodes - and the ozone production capacity along with it - may be increased greatly, while the space requirement of the electrodes is increased only to a smaller extent. The optimal number of the modularly arranged electrode groups is between 2 pc. and 30 pc. based on the desired maximal ozone production capacity, but naturally it may be substantially an arbitrarily great number.

Another important finding forming the basis of the invention is that if the flat plate electrodes are made of steel sheets preferably slitted and corrugated by extrusion, firstly the number of discharges occurring on the surface of the flat electrode plates is increased and secondly the efficiency of cooling of the electrode plates by the air or oxygen also functioning as ozone source is also greatly increased. The thickness of the flat electrode plates is preferably 0.3-1.5 mm.

A further important finding forming the basis of the invention is that the amount of ozone produced is greatly affected by the precise adjustment of the air gap between the flat plate electrodes and the dielectric plate, and by adjusting the air gap according to the type of the air or oxygen used as ozone source. A part of the finding is that the adjustment of the air gap to the precise dimensions can be ensured most effectively by the use of resilient insulating shim plates. The size of the air gap is 0.1-1.9 mm, while the size of the surface features of the plates is preferably at most twice the size of the air gap, e.g. 0.2-3.8 mm.

Another important finding forming the basis of the invention is that by using microcontrollers for internal control in the high-voltage power electric generator and by taking the environmental parameters (air temperature, humidity, field strength measured on the high-voltage units) into consideration when implementing adjustments, the signal shape and frequency of the supply voltage pulse arriving at the ozone producing structural unit may be brought significantly closer to the ideal parameters necessary for optimal ozone production. The supply voltage of the ozone producing structural unit is 6 - 12 kV and its frequency is preferably 1 - 35 kHz, its waveform is selected from the group comprising sine, square, triangle, sawtooth and any combinations thereof.

In order to provide practical manufacturing, the shape of the electrode and dielectric plates used in the modular arrangement may be produced preferably from a larger sheet by a suitable cutting method with creating minimal amounts of waste, i.e. the shape is preferably hexagon, triangle or tetragon, particularly preferably rectangle. The use of rectangle shaped plates is particularly preferable for filling the space available for the placement of the modules (the insulating housing), and also in the aspects of manufacturing and assembly.

The invention solves the aforementioned problems by placing an ozone producing structural unit in the path of the blown air or oxygen used as ozone source. The ozone producing structural unit is operated on the principle of alternating current auxiliary electrode cold arc discharge with its capacity increased by limited arc discharge, with an alternating voltage voltage source. This solution does not result in high-temperature arc discharges, thus the risk of fire hazard may be eliminated, and at the same time the device is capable of producing extremely large quantities of ozone. The ozone producing structural unit of the ozone generator is placed in one or more insulating housings/air ducts, preferably having a tetragonal cross section, placed in a direction parallel to or coaxial to the air blowing direction. The discharge occurs on two flat electrode plates of the same size, preferably made of stainless steel, preferably slitted and corrugated by extrusion. The flat electrode plates are arranged parallel to or at a small angle with each other. This flat electrode plate pair is parallel to the air blowing direction. The flat electrode plates are separated from each other by a flat dielectric plate, whose material may be any suitable dielectric known to a person skilled in the art, preferably glass or ceramic. Suitably formed air gaps are provided between the flat electrode plates and the flat dielectric plate. Electrode groups comprising the flat electrode plates, resilient insulating shim plates, the flat dielectric plate and insulating spacer frame elements are placed into the outer insulating housing in a suitably selected number, in a side-by-side configuration in a modular manner, which is held and fastened together by suitable fastening screws. The apparatus has an electric generator producing high voltage and high frequency voltage connected to the ozone producing unit by high voltage cables. The high voltage generator has a power supply with a capability to improve power factor, signal generator and signal selecting unit, signal amplifier and breaker bridge drive unit, a high frequency breaker unit with a full bridge system, a high voltage high frequency transformer and filter unit, a microcontroller based central control unit and sensors measuring ambient air temperature, humidity and electric field strength.

During the method according to the invention, parameters affecting the ozone production (such as air temperature, humidity, field strength measured on the high voltage units) are measured and the parameters of the signals applied to electrodes are adjusted with taking these into consideration, the voltage is preferably in the range of 6 to 12 kV, the frequency is preferably in the range of 1 to 35 kHz, the waveform is preferably selected from the group comprising sine, square, triangle, sawtooth and any combinations thereof. The invention is naturally not limited to the given values, values outside the given ranges can also be used as known to a person skilled in the art.

In what follows, the invention is described in detail with reference to the accompanying drawings, wherein
- Figure 1 is a schematic representation of a single electrode group of the ozone producing structural unit of the ozone generator in a front view with respect to the air blowing direction;
- Figure 2 is a schematic representation of an exemplary embodiment of the ozone producing structural unit of the ozone generator - comprising several modularly arranged electrode groups
- in a front view with respect to the air blowing direction and a connection diagram thereof; and
- Figure 3 is a schematic drawing of the electric connections of the high voltage high frequency electric generator unit of the ozone generator, and its connection to the ozone producing structural unit.

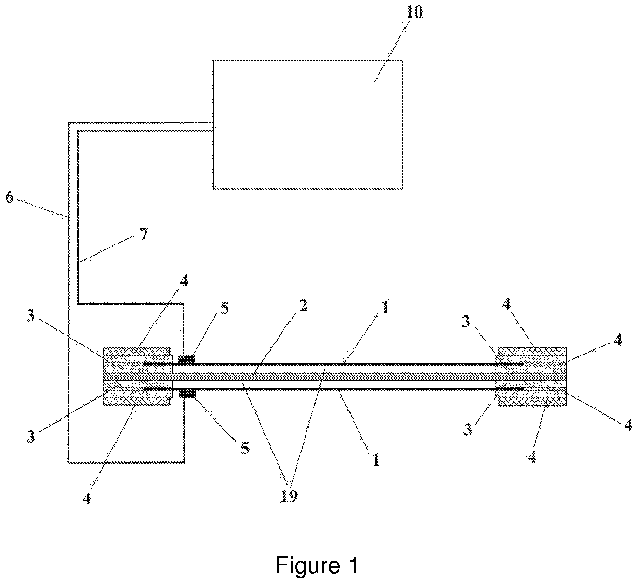

Figure 1 shows schematic representation of a single electrode group of the ozone producing structural unit of the ozone generator. The two flat electrode plates 1, which are preferably slitted and corrugated by extrusion, are placed parallel to or at a small angle to each other and to the dielectric plate 2. The precise size of the defined sized air gap 19 between the flat electrode plates 1 and the dielectric plate 2 is ensured by the resilient insulating shim plates 3. The ozone producing structural unit is connected to the high voltage high frequency electric generator unit 10 by a first high voltage cable 6 and a second high voltage cable 7. The first high voltage cable 6 and the second high voltage cable 7 are connected to the flat electrode plates 1 by electrode studs 5. The electrode group comprises the flat electrode plates 1, the resilient insulating shim plates 3, the dielectric plate 2 and the insulating spacer frame elements 4.

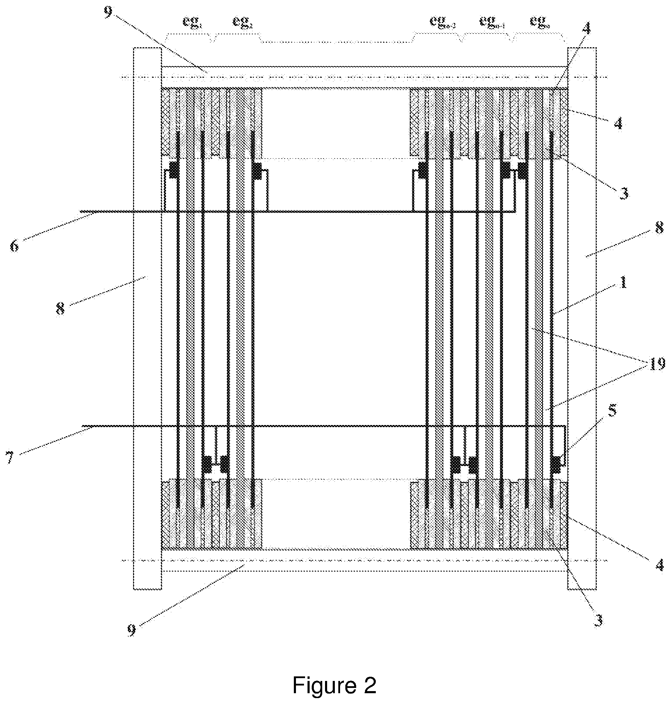

Figure 2 is a schematic representation of an exemplary embodiment of the ozone producing structural unit of the ozone generator - comprising a system of several modularly arranged electrode groups - and the connection diagram thereof. A suitably selected number of electrode groups comprising the flat electrode plates 1, the resilient insulating shim plates 3, the dielectric plate 2 and the insulating frame elements 4 are arranged in modular manner in series next to one another in the outer insulating housing 8, which is held together and fastened by suitably designed fastening screws 9. The Figure shows the air gaps 19 as well as the electric connection diagram of the first high voltage cables 6 and the second high voltage cables 7.

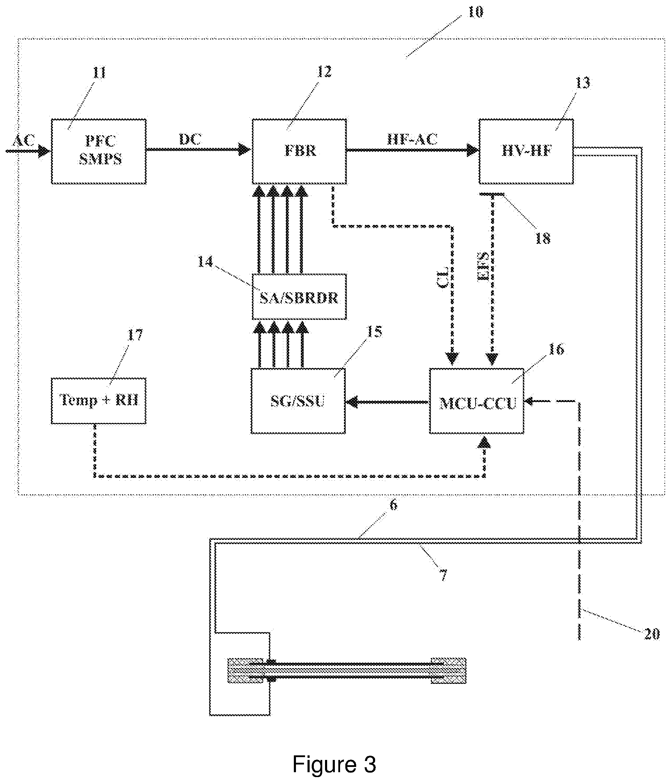

Figure 3 is a schematic drawing of the electric connections of the high voltage high frequency electric generator unit 10 of the ozone generator, and its connection to the ozone producing structural unit. In the Figure abbreviations according to English terminology are used in schematic notations of individual parts. The line power supply voltage is transformed into direct current by the power factor correction switched mode power supply 11 in a controlled manner.

The direct current generated in the power factor correcting switched mode power supply 11 is converted into high frequency pulse voltage by the high frequency full bridge breaker 12. The high frequency full bridge breaker 12 is controlled by the microcontroller based central control unit 16 through the signal generator and signal selecting unit 15 and the signal amplifier and breaker bridge driving unit 14. The high frequency pulse voltage generated by the high frequency full bridge breaker 12 is converted to high voltage high frequency voltage by passing through the high frequency high voltage transformer and filter unit 13, which is connected to the ozone producing structural unit by the first high voltage cable 6 and the second high voltage cable 7. The microcontroller based central control unit 16 measures the current load (CL) of the high frequency full bridge breaker 12, and it also measures the environmental parameters with the temperature and humidity sensor unit 17 and the electromagnetic field strength sensor unit 18, and - as a function of the measurement results - it controls the waveform and frequency of the high voltage to be generated and controls the signal generator and signal selecting unit 15 for providing the ideal pulse-waveform necessary for optimal ozone production. In order to allow external adjusting of operation parameters, an external control cable 20 is connected to the microcontroller based central control unit 16.

An advantage of the solution according to the invention is that the suitable connection of the components provide a mutual improvement in their beneficial properties resulting in a more positive effect and more efficient operation regarding the aforementioned objects, than other known solutions for similar purposes.

The invention is of course not limited exclusively to the embodiment of the ozone generator described above, but can be realized in several different ways within scope of protection set forth by the claims.

## Claims

1. An ozone generator of a gas blow-through type, especially to produce a gas mixture of ozone/air or ozone/oxygen, said generator comprises electrode groups comprising two flat electrode plates (1), one dielectric plate (2) disposed between the flat electrode plates (1), insulating shim plates (3) arranged between each of flat electrode plates (1) and the dielectric plate (2), as well as insulating spacer frame elements (4) and electrode studs (5) arranged on the flat electrode plates (1), said electrode studs being electrically connected to a high voltage high frequency electric generator unit (10) of the ozone generator through a first high voltage cable (6) and a second high voltage cable (7) **characterized by** an outer insulating housing (8), held together and fastened by suitable fastening screws (9), wherein the outer insulating housing (8) is dimensioned so as to allow several electrode groups to be modularly arranged within said housing parallel to each other side by side and to be electrically connected.

2. The ozone generator according to claim 1, **characterized in that** the electrode plates are of rectangular shape and substantially equal in size.

3. The ozone generator according to claim 1 or 2, **characterized in that** the at least two flat electrode plates (1) are made of stainless steel, being slitted and corrugated by drawing, wherein said flat electrode plates (1) being preferably arranged parallel or at a small angle to each other and to the dielectric plate (2).

4. The ozone generator according to any one of claims 1 to 3, **characterized in that** the insulating shim plates (3) are resilient in order to allow a precise adjustment of the size of an air gap (19) between the flat electrode plates (1) and the dielectric plate (2), and the insulating spacer frame elements (4) are fastened to the flat electrode plates (1) and the dielectric plate (2).

5. The ozone generator according to any one of claims 1 to 4, **characterized in that** an electrode group comprising the flat electrode plates (1), the dielectric plate (2), the resilient insulating shim plates (3) and the insulating spacer frame elements (4) is arranged preferably parallel to or coaxially with a blowing direction of air or oxygen used as ozone source.

6. The ozone generator according to any one of claims 1 to 5, **characterized in that** the flat electrode plates (1) are connected to the high voltage high frequency electric generator unit (10) via the electrode studs (5) through the first high voltage cable (6) and the second high voltage cable (7).

7. The ozone generator according to any one of claims 1 to 6, **characterized in that** to convert line supply voltage to regulated direct current, a power factor correction switched mode power supply (11) is provided in the high voltage high frequency electric generator (10); to convert the generated direct current to high frequency pulsed voltage, a high frequency full bridge breaker (12) is connected to the power factor correction switched mode power supply (11); for an optimal control of the high frequency voltage, the high frequency full bridge breaker (12) is connected to a microcontroller based central control unit (16) via a signal generator and signal selecting unit (15) and via a signal amplifier and breaker bridge drive unit (14); an output of the high frequency full bridge breaker (12) is connected to a high voltage high frequency transformer and filter unit (13), said unit (13) being connected to the flat electrode plates (1) via the electrode studs (5) through the first high voltage cable (6) and the second high voltage cable (7).

8. The ozone generator according to any one of claims 1 to 7, **characterized in that** to measure current load, the high frequency full bridge breaker unit (12) is connected to the microcontroller based central control unit (16) and to measure environmental parameters, temperature and humidity measuring sensor unit (17) and electromagnetic field strength measuring sensor unit (18) are connected to the microcontroller based central control unit (16); said signal generator and signal selecting unit (15) is also connected to the microcontroller based central control unit (16) to provide a control of high voltage frequency and waveform in harmony with the obtained measurement results.

9. The ozone generator according to any one of claims 1 to 8, **characterized in that** to externally control operational parameters, an external control cable (20) is connected to the microcontroller based central control unit (16).

10. Method for producing ozone, wherein a gas comprising oxygen, preferably air, is directed through an air gap formed between a pair of flat electrode plates, while applying an electric signal to said electrode plates, wherein voltage of said signal is selected so as to produce ozone between said plates at the pressure prevailing between the plates, **characterized in that** to produce ozone, an ozone generator according to any one of claims 1 to 9 is used.

11. The method according to claim 10, **characterized in that** the electrical signal applied to the electrode plates is provided by a signal having a voltage ranging from 6 kV to 12 kV, a frequency ranging from 1 kHz to 35 kHz and a waveform selected from the group consisting of sine, square, triangle and sawtooth waveforms and any combinations thereof.

12. The method according to claim 10 or 11, **characterized in that** at least one of the voltage, frequency and waveform of the electric signal is adjusted as a function of at least one parameter selected from the group consisting of the temperature and humidity of the gas comprising oxygen, and the ozone concentration to be achieved.

## Patentansprüche

1. Ozongenerator vom Gasdurchblastyp, insbesondere zum Erzeugen eines Gasgemisches aus Ozon/Luft oder Ozon/Sauerstoff, wobei der Generator Elektrodengruppen umfasst, die zwei flache Elektrodenplatten (1), eine zwischen den flachen Elektrodenplatten (1) angeordnete dielektrische Platte (2), isolierende Scheibenplatten (3), die zwischen jeder der flachen Elektrodenplatten (1) und der dielektrischen Platte (2) angeordnet sind, sowie isolierende Abstandshalterrahmenelemente (4) und Elektrodenbolzen (5), die auf den flachen Elektrodenplatten (1) angeordnet sind, umfasst, wobei die Elektrodenbolzen über ein erstes Hochspannungskabel (6) und ein zweites Hochspannungskabel (7) elektrisch mit einer Hochspannungs-Hochfrequenz-Stromgeneratoreinheit (10) des Ozongenerators verbunden sind, **gekennzeichnet durch** ein äußeres Isoliergehäuse (8), das durch geeignete Befestigungsschrauben (9) zusammengehalten und befestigt wird, wobei das äußere Isoliergehäuse (8) so dimensioniert ist, dass mehrere Elektrodengruppen in dem Gehäuse parallel zueinander Seite an Seite modular angeordnet und elektrisch verbunden sein können.

2. Ozongenerator nach Anspruch 1, **dadurch gekennzeichnet, dass** die Elektrodenplatten eine rechteckige Form haben und im wesentlichen gleich groß sind.

3. Ozongenerator nach Anspruch 1 oder 2, **dadurch gekennzeichnet, dass** die mindestens zwei flachen Elektrodenplatten (1) aus rostfreiem Stahl gefertigt sind, die durch Ziehen geschlitzt und gewellt sind, wobei die flachen Elektrodenplatten (1) vorzugsweise parallel oder in einem kleinen Winkel zueinander und zu der dielektrischen Platte (2) angeordnet sind.

4. Ozongenerator nach einem der Ansprüche 1 bis 3, **dadurch gekennzeichnet, dass** die isolierenden Scheibenplatten (3) robust sind, um eine präzise Einstellung der Größe eines Luftspalts (19) zwischen den flachen Elektrodenplatten (1) und der dielektrischen Platte (2) zu ermöglichen, und die isolierenden Abstandshalterrahmenelemente (4) an den flachen Elektrodenplatten (1) und der dielektrischen Platte (2) befestigt sind.

5. Ozongenerator nach einem der Ansprüche 1 bis 4, **dadurch gekennzeichnet, dass** eine Elektrodengruppe, die die flachen Elektrodenplatten (1), die dielektrische Platte (2), die robusten isolierenden Scheibenplatten (3) und die isolierenden Abstandshalterrahmenelemente (4) umfasst, vorzugsweise parallel zu oder koaxial zu einer Blasrichtung von Luft oder Sauerstoff angeordnet ist, die als Ozonquelle verwendet werden.

6. Ozongenerator nach einem der Ansprüche 1 bis 5, **dadurch gekennzeichnet, dass** die flachen Elektrodenplatten (1) über die Elektrodenbolzen (5) durch das erste Hochspannungskabel (6) und das zweite Hochspannungskabel (7) mit der Hochspannungs-Hochfrequenz-Stromgeneratoreinheit (10) verbunden sind.

7. Ozongenerator nach einem der Ansprüche 1 bis 6, **dadurch gekennzeichnet, dass** zum Umwandeln der Netzspannung in geregelten Gleichstrom ein leistungsfaktorkorrigierendes Schaltnetzteil (11) in der Hochspannungs-Hochfrequenz-Stromgeneratoreinheit (10) vorgesehen ist; zum Umwandeln des erzeugten Gleichstroms in eine gepulste Hochfrequenzspannung ist ein Hochfrequenz-Vollbrückenschalter (12) mit dem leistungsfaktorkorrigierenden Schaltnetzteil (11) verbunden; für eine optimale Steuerung der Hochfrequenzspannung ist der Hochfrequenz-Vollbrückenschalter (12) über eine Signalgenerator- und Signalauswahleinheit (15) und über eine Signalverstärker- und Schalterbrückenantriebseinheit (14) mit einer Mikrocontroller-basierten zentralen Steuereinheit (16) verbunden; ein Ausgang des Hochfrequenz-Vollbrückenschalters (12) ist mit einer Hochspannungs-Hochfrequenz-Transformator- und Filtereinheit (13) verbunden, wobei die Einheit (13) über die Elektrodenbolzen (5) durch das erste Hochspannungskabel (6) und das zweite Hochspannungskabel (7) mit den flachen Elektrodenplatten (1) verbunden ist.

8. Ozongenerator nach einem der Ansprüche 1 bis 7, **dadurch gekennzeichnet, dass** die Hochfrequenz-Vollbrückenschaltereinheit (12) zur Messung der Strombelastung mit der Mikrocontroller-basierten zentralen Steuereinheit (16) verbunden ist und dass zur Messung von Umgebungsparametern, Temperatur und Feuchtigkeit eine Messsensoreinheit (17) und eine Sensoreinheit (18) zur Messung der Stärke des elektromagnetischen Feldes mit der Mikrocontroller-basierten zentralen Steuereinheit (16) verbunden sind; wobei die Signalgenerator- und Signalauswahleinheit (15) auch mit der Mikrocontroller-basierten zentralen Steuereinheit (16) verbunden ist, um eine Steuerung der Hochspannungsfrequenz und der Wellenform in Übereinstimmung mit den erhaltenen Messergebnissen bereitzustellen.

9. Der Ozongenerator nach einem der Ansprüche 1 bis 8, **dadurch gekennzeichnet, dass** zur externen Steuerung von Betriebsparametern ein externes Steuerkabel (20) mit der Mikrocontroller-basierten zentralen Steuereinheit (16) verbunden ist.

10. Verfahren zum Erzeugen von Ozon, wobei ein Gas, das Sauerstoff, vorzugsweise Luft, umfasst, durch einen Luftspalt geleitet wird, der zwischen einem Paar flacher Elektrodenplatten gebildet ist, während ein elektrisches Signal an die Elektrodenplatten angelegt wird, wobei die Spannung des Signals so ausgewählt wird, dass bei dem zwischen den Platten herrschenden Druck Ozon zwischen den Platten erzeugt wird, **dadurch gekennzeichnet, dass** ein Ozongenerator nach einem der Ansprüche 1 bis 9 zum Erzeugen des Ozons verwendet wird.

11. Verfahren nach Anspruch 10, **dadurch gekennzeichnet, dass** das an die Elektrodenplatten angelegte elektrische Signal durch ein Signal mit einer Spannung im Bereich von 6 kV bis 12 kV, einer Frequenz im Bereich von 1 kHz bis 35 kHz und einer Wellenform, ausgewählt aus der Gruppe bestehend aus Sinus-, Quadrat-, Dreieck- und Sägezahn-Wellenformen und beliebigen Kombinationen dieser, bereitgestellt wird.

12. Verfahren nach Anspruch 10 oder 11, **dadurch gekennzeichnet, dass** mindestens eine der Spannung, Frequenz und Wellenform des elektrischen Signals als eine Funktion von mindestens einem Parameter, ausgewählt aus der Gruppe, die aus der Temperatur und Feuchtigkeit des Sauerstoff umfassenden Gases besteht, und der zu erreichenden Ozonkonzentration eingestellt wird.

## Revendications

1. Générateur d'ozone à gaz soufflé, particulièrement pour produire un mélange gazeux ozone/air ou ozone/oxygène, ledit générateur comprend des groupes d'électrodes comprenant deux plaques d'électrode plate (1), une plaque diélectrique (2) disposée entre les plaques d'électrode plate (1), des plaques de compensation isolantes (3) agencées entre chacune de plaques d'électrode plate (1) et la plaque diélectrique (2), ainsi que des éléments de cadre d'espacement isolants (4) et des goujons d'électrode (5) agencés sur les plaques d'électrode plate (1), lesdits goujons d'électrode étant électriquement raccordés à une unité de générateur électrique à haute tension et haute fréquence (10) du générateur d'ozone par le biais d'un premier câble à haute tension (6) et d'un second câble à haute tension (7) **caractérisé par** un boîtier isolant externe (8), maintenu et fixé par des vis de fixation appropriées (9), dans lequel le boîtier isolant externe (8) est dimensionné de manière à permettre à plusieurs groupes d'électrodes d'être agencés de manière modulaire dans ledit boîtier parallèles les uns aux autres côte à côte et d'être électriquement raccordés.

2. Générateur d'ozone selon la revendication 1, **caractérisé en ce que** les plaques d'électrode sont de forme rectangulaire et sensiblement de taille égale.

3. Générateur d'ozone selon la revendication 1 ou 2, **caractérisé en ce que** les au moins deux plaques d'électrode plate (1) sont faites d'acier inoxydable, étant fendues et ondulées par tirage, dans lequel lesdites plaques d'électrode plate (1) étant de préférence agencées parallèlement ou selon un petit angle les unes par rapport aux autres et par rapport à la plaque diélectrique (2).

4. Générateur d'ozone selon l'une quelconque des revendications 1 à 3, **caractérisé en ce que** les plaques de compensation isolantes (3) sont résistantes afin de permettre un ajustement précis de la taille d'un entrefer (19) entre les plaques d'électrode plate (1) et la plaque diélectrique (2), et les éléments de cadre d'espacement isolants (4) sont fixés aux plaques d'électrode plate (1) et à la plaque diélectrique (2).

5. Générateur d'ozone selon l'une quelconque des revendications 1 à 4, **caractérisé en ce qu'**un groupe d'électrodes comprenant les plaques d'électrode plate (1), la plaque diélectrique (2), les plaques de compensation isolantes résistantes (3) et les éléments de cadre d'espacement isolants (4) est agencé de préférence parallèlement à ou coaxialement par rapport à une direction de soufflage d'air ou d'oxygène utilisé comme source d'ozone.

6. Générateur d'ozone selon l'une quelconque des revendications 1 à 5, **caractérisé en ce que** les plaques d'électrode plate (1) sont raccordées à l'unité de générateur électrique à haute tension et haute fréquence (10) par l'intermédiaire des goujons d'électrode (5) par le biais du premier câble à haute tension (6) et du second câble à haute tension (7).

7. Générateur d'ozone selon l'une quelconque des revendications 1 à 6, **caractérisé en ce que**, pour convertir une tension d'alimentation de ligne en courant continu régulé, une alimentation électrique en mode commuté de correction de facteur de puissance (11) est fournie dans le générateur électrique à haute tension et haute fréquence (10) ; pour convertir le courant continu généré en tension pulsée à haute fréquence, un disjoncteur de pont intégral à haute fréquence (12) est raccordé à l'alimentation électrique en mode commuté de correction de facteur de puissance (11) ; pour un contrôle optimal de la tension à haute fréquence, le disjoncteur de pont intégral à haute fréquence (12) est raccordé à une unité de contrôle centrale basé sur un microcontrôleur (16) par l'intermédiaire d'une unité de générateur de signal et de sélection de signal (15) et par l'intermédiaire d'une unité d'entraînement de pont de disjoncteur et d'amplificateur de signal (14) ; une sortie du disjoncteur de pont intégral à haute fréquence (12) est raccordée à une unité de filtre et de transformateur de haute tension et haute fréquence (13), ladite unité (13) étant raccordée aux plaques d'électrode plate (1) par l'intermédiaire des goujons d'électrode (5) par le biais du premier câble à haute tension (6) et du second câble à haute tension (7).

8. Générateur d'ozone selon l'une quelconque des revendications 1 à 7, **caractérisé en ce que,** pour mesurer la charge actuelle, l'unité de disjoncteur de pont intégral à haute fréquence (12) est raccordée à l'unité de contrôle centrale basé sur un microcontrôleur (16) et pour mesurer des paramètres environnementaux, une unité de capteur de mesure de température et d'humidité (17) et une unité de capteur de mesure de force de champ magnétique (18) sont raccordées à l'unité de contrôle centrale basé sur un microcontrôleur (16) ; ladite unité de générateur de signal et de sélection de signal (15) est également raccordée à l'unité de contrôle centrale basé sur un microcontrôleur (16) pour fournir un contrôle de fréquence et de longueur d'onde à haute tension en harmonie avec les résultats de mesure obtenus.

9. Générateur d'ozone selon l'une quelconque des revendications 1 à 8, **caractérisé en ce que,** pour contrôler extérieurement des paramètres opérationnels, un câble de contrôle externe (20) est raccordé à l'unité de contrôle centrale basé sur un microcontrôleur (16).

10. Procédé de production d'ozone, dans lequel un gaz comprenant de l'oxygène, de préférence l'air, est dirigé à travers un entrefer formé entre une paire de plaques d'électrode plate, tout en appliquant un signal électrique auxdites plaques d'électrode, dans lequel la tension dudit signal est sélectionnée de manière à produire de l'ozone entre lesdites plaques à la pression dominante entre les plaques, **caractérisé en ce que,** pour produire de l'ozone, un générateur d'ozone selon l'une quelconque des revendications 1 à 9 est utilisé.

11. Procédé selon la revendication 10, **caractérisé en ce que** le signal électrique appliqué aux plaques d'électrode est fourni par un signal présentant une tension allant de 6 kV à 12 kV, une fréquence allant de 1 kHz à 35 kHz et une forme d'onde sélectionnée à partir du groupe consistant en des formes d'onde sinusoïdale, carrée, triangulaire et en dents de scie et l'une quelconque combinaison de celles-ci.

12. Procédé selon la revendication 10 ou 11, **caractérisé en ce qu'**au moins une parmi la tension, la fréquence et la forme d'onde du signal électrique est ajustée en fonction d'au moins un paramètre sélectionné à partir du groupe consistant en la température et l'humidité du gaz comprenant l'oxygène, et la concentration en ozone à obtenir.
